Europäisches Patentamt

European Patent Office

Office européen des brevets

(11) Numéro de publication: **0 280 250**
**A1**

## DEMANDE DE BREVET EUROPEEN

(21) Numéro de dépôt: 88102615.7

(22) Date de dépôt: 23.02.88

(51) Int. Cl.⁴ **A22C 7/00** , B65B 11/04 , A21C 3/06 , A21C 9/06

(30) Priorité: 26.02.87 FR 8702588

(43) Date de publication de la demande:
31.08.88 Bulletin 88/35

(84) Etats contractants désignés:
AT BE CH DE ES FR GB GR IT LI LU NL SE

(71) Demandeur: **BOCA-OUEST**
**1 Place des Prairies**
**F-49300 Cholet(FR)**

(72) Inventeur: **Villemin, Daniel**
**131 Rue du Centre**
**F-94490 Ormesson(FR)**

(74) Mandataire: **Casalonga, Axel et al**
**BUREAU D.A. CASALONGA OFFICE JOSSE &**
**PETIT Morassistrasse 8**
**D-8000 München 5(DE)**

(54) Procédé et dispositif de formage de produits mous et collants.

(57) Procédé et dispositif pour amener des produits mous et/ou collants dans une configuration sensiblement cylindrique.

Le produit à former est placé sur un support (12) flexible, allongé, horizontal que l'on déforme pour lui faire décrire une boucle (16) autour d'une partie au moins du produit. On déplace la boucle (16) dans le sens longitudinal pour faire rouler le produit sur lui-même, sans glissement par rapport au support (12).

Application : notamment à la mise en forme de produits alimentaires, par exemple au formage de paupiettes.

FIG. 2

## Procédé et dispositif de formage de produits mous et collants.

La présente invention se rapporte à un procédé de formage de produits mous et/ou collants pour les amener dans une configuration sensiblement cylindrique.

Les produits auxquels s'applique la présente invention comprennent notamment des produits alimentaires à base de viande ou de poisson, particulaires (par exemple chair hâchée) ou non, mais également d'autres produits tels que des légumes, ayant tous une consistance molle et collante qui rend leur manipulation difficile. Le formage peut s'appliquer à ces produits pris isolément ou encore au formage de tels produits entourés par une enveloppe qui peut avoir soit uniquement une fonction d'emballage (protection), soit d'autres fonctions. Ce dernier cas se présente notamment pour des produits alimentaires dont l'enveloppe peut également avoir une fonction alimentaire (par exemple dans le cas de paupiettes, de rouleaux de macédoine de légumes entourés d'une tranche de jambon, etc.)

On a déjà préconisé dans les demandes de brevets français 2 546 734 et 2 515 484 de réaliser de tels produits par enroulement au moyen d'un support flexible formant une boucle qui est déplacée en translation. Toutefois il a été préconisé, en particulier dans la demande de brevet français 2 515 484, de desserrer progressivement la boucle formée par le support flexible pour tenir compte de l'augmentation de diamètre de l'enroulement. Dans le brevet hollandais 29 743, on forme une boucle dans un support flexible dont les deux extrémités sont fixes, au moyen de deux supports transversaux qui sont ensuite déplacés simultanément en translation de façon à provoquer l'enroulement d'un produit plat..

La présente invention a pour objet de perfectionner les procédés connus afin de permettre l'obtention de produits enroulés parfaitement calibrés ce qui n'était pas le cas auparavant.

Selon le procédé de formage de l'invention, de produits mous et/ou collants, pour les amener dans une configuration sensiblement cylindrique, on place le produit sur un support flexible allongé horizontal, dont les deux extrémités sont maintenues fixes, on déforme le support pour lui faire décrire une boucle autour d'une partie au moins du produit, et on déplace cette boucle dans la direction longitudinale du support au moyen d'au moins un organe mobile partiellement entouré par le support flexible, de façon à faire rouler le produit sur lui-même, sensiblement sans glissement par rapport au support.

Pendant le déplacement de la boucle, on resserre simultanément et progressivement la boucle autour du produit de façon à procéder à un calibrage du produit pendant le formage.

Si l'on souhaite entourer en outre le produit d'une enveloppe, on place un matériau en feuille entre le support flexible et le produit de manière que le produit se trouve enroulé dans cette feuille formant enveloppe, lors de son roulage sur lui-même.

Dans une variante du procédé de l'invention, on place le produit sur un support flexible allongé horizontal dont les deux extrémités sont maintenues fixes, on soutient le support entre ses extrémités par deux guides transversaux espacés de façon à définir entre eux une boucle dudit support, on place le produit dans la boucle entre les deux guides, on déplace les deux guides simultanément dans la direction longitudinale du support pour déplacer la boucle ainsi formée et rouler le produit sur lui-même, et, après roulage, on dégage le produit du support. Après avoir placé le produit sur le support maintenu horizontal entre les deux guides, on rapproche l'une de l'autre les deux extrémités du support de façon à entraîner la déformation du support en boucle en U entre les guides sous l'effet du poids du produit. Le dégagement final du produit se fait en écartant à nouveau l'une de l'autre les deux deux extrémités du support jusqu'à supprimer la boucle.

Le dispositif conforme à l'invention de formage de produits mous, collants, pour les amener dans une configuration sensiblement cylindrique, peut comprendre :

-un support flexible allongé horizontal, destiné à recevoir le produit sur sa face supérieure,

-deux guides transversaux disposés en-dessous du support pour soutenir ce dernier en formant une zone de réception de produit située entre les extrémités du support,

-des moyens pour déplacer une extrémité du support longitudinalement dans les deux sens opposés, pour permettre au support de former une boucle entre les deux vides, sous l'effet du poids du produit placé dans cette zone, et pour supprimer ladite boucle afin de dégager le produit,

-et des moyens pour déplacer simultanément les deux guides dans le sens longitudinal du support pour rouler sur lui-même le produit se trouvant dans la boucle.

Pour permettre un calibrage du produit, ce dispositif peut, en outre, comprendre des moyens pour rapprocher les deux guides l'un de l'autre afin de fermer la boucle en exerçant un serrage sur le produit pendant le roulage et pour écarter l'un de l'autre les deux guides avant de dégager le produit.

Suivant une variante le dispositif de formage de produits mous, collants pour les amener dans une configuration sensiblement cylindrique, peut comprendre :

-un tapis allongé flexible dont les deux extrémités longitudinales sont fixes;

-des moyens transversaux de déviation pour faire décrire au tapis, entre ses deux extrémités, un trajet en forme de double boucle en S;

-de moyens de support pour soutenir, dans un plan horizontal, le brin inférieur du tapis déformé en S, et

-des moyens de manoeuvre pour déplacer longitudinalement lesdits moyens de déviation du tapis entre les deux extrémités de ce dernier.

Dans ce cas, les moyens de déviation du tapis comprennent avantageusement un rouleau à axe horizontal s'étendant, à distance au-dessus des moyens de support du tapis, transversalement sur toute la largeur du tapis, et deux galets à axes horizontaux, transversaux, alignés, situés à proximité au-dessus desdits moyens de support et agissant sur les deux bords du tapis, le tapis passant dans un sens autour du rouleau, et dans l'autre sens autour des galets.

De préférence, le rouleau est monté mobile en hauteur par rapport aux moyens de support du brin inférieur du tapis et le dispo sitif comprend des moyens pour guider le rouleau, de manière à le rapprocher ou à l'éloigner selon le cas des moyens de support du brin inférieur du tapis pendant le déplacement du rouleau d'une extrémité à l'autre du tapis.

A cet effet, le rouleau est avantageusement monté sur un coulisseau mobile verticalement sur un chariot mobile horizontalement dans le sens longitudinal du tapis sous l'action desdits moyens de manoeuvre, le coulisseau comportant un galet suiveur de came en contact avec une came rectiligne.

De préférence, dans son application au formage de paupiettes, le dispositif comporte également des moyens pour préformer une paupiette sur le tapis avant de rouler cette paupiette préformée sur le tapis. Ces moyens comprennent avantageusement trois tiges horizontales susceptibles d'être abaissées sur le brin inférieur du tapis, après recul complet des moyens de déviation du tapis, à savoir une première tige orientée transversalement à la longueur du tapis et une seconde et troisième tiges orientées parallèlement à la longueur du tapis. Ces trois tiges sur lesquelles il suffit de poser une tranche de viande, une boulette de chair étant ensuite placée sur la tranche, entre les tiges, comportent des moyens de manoeuvre qui soulèvent successivement les trois tiges de manière que les trois tiges rabattent successivement les bords de la tranche de viande sur trois côtés au-dessus de la boulette, avant de dégager complètement le tapis en avant des moyens de déviation du tapis pour permettre l'avancement de ces moyens en vue du roulage sur le tapis de la paupiette ainsi préformée.

De préférence, la première tige transversale est fixée à l'extrémité inférieure d'un levier pendulaire articulé par un axe horizontal transversal sur la tige de piston d'un vérin vertical de levage, de préférence pneumatique. De façon analogue, chacune des seconde et troisième tiges longitudinales est fixée à l'extrémité inférieure d'un levier pendulaire articulé par un axe horizontal longitudinal sur la tige de piston d'un vérin vertical de levage, de préférence pneumatique. Chaque levier pendulaire comporte un profil de came coopérant avec une butée de préférence effaçable à l'encontre de l'action d'un ressort au-delà d'un effort corrrespondant à un seuil défini par la force du ressort, de sorte que sous l'effet de la montée des leviers pendulaires, les profils de came de ces derniers font pivoter les leviers et impriment aux tiges le mouvement requis pour le relèvement des côtés de la tranche de viande sur le dessus de la boulette.

Afin d'immobiliser la boulette de chair pendant le relèvement des bords de la tranche de viande sur le dessus de la boulette, le dispositif comporte avantageusement un organe de blocage, par exemple sous la forme d'une fourchette actionnée par des moyens de manoeuvre, de manière à pouvoir être amené d'une position de repos où il se trouve en dehors de la trajectoire des moyens de déviation du tapis à une position active dans laquelle elle immobilise la boulette sur le tapis.

En se référant aux dessins schématiques annexés, on va décrire ci-après plus en détail le procédé conforme à l'invention de formage, ainsi que plusieurs exemples de réalisation d'un dispositif pour la mise en oeuvre de ce procédé; sur les dessins :

les figures 1a à 1d montrent les étapes du préformage d'une paupiette;

la figure 2 illustre le formage et calibrage par roulage d'une paupiette préformée;

la figure 3 est une vue frontale d'un dispositif conforme à l'invention de formage de paupiettes;

la figure 4 est une coupe suivant IV-IV de la figure 3;

la figure 5 est une vue d'ensemble d'une installation de formage et de ficelage de paupiettes;

la figure 6 illustre le roulage d'un produit plat par enroulement à plusieurs tours;

la figure 7a à 7f représentent un autre mode de formage par roulage.

Selon les figures 1a à 1d qui illustrent le préformage d'une paupiette à partir d'une tranche de viande 1, par exemple d'une tranche d'escalope, et d'une boulette de chair 2, la tranche 1 est posée sur un ensemble de trois tiges 3, 4, 5 horizontales, les deux tiges 4 et 5 étant disposées dans un même plan horizontal en étant situées parallèlement et à distance l'une de l'autre, alors que la tige 3 est disposée au-dessus des deux tiges 4, 5 en étant orientée perpendiculairement à ces dernières. La tranche 1 est posée sur les trois tiges de manière que trois bords de la tranche recouvrent les trois tiges.

La boulette de chair 2 est ensuite posée en position sensiblement centrale sur la tranche 1 (figure 1a).

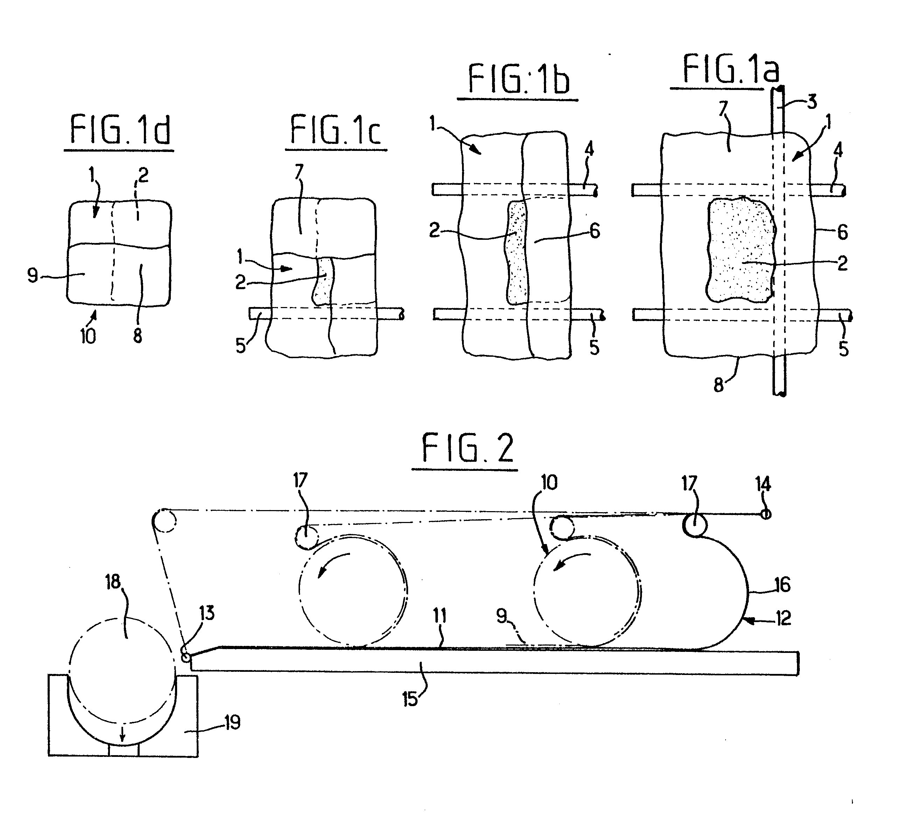

On soulève ensuite la tige 3 par des moyens non représentés de telle manière que cette tige 3 rabat sur le dessus de la boulette 2 le bord 6 de la tranche 1 qui reposait auparavant sur la tige 3 (figure 1b).

Au cours de la phase suivante, on soulève la tige 4 sous l'action de moyens non représentés, de manière que cette tige rabatte sur le dessus de la boulette 2 le bord 7 de la tranche 1 qui reposait auparavant sur la tige 4 (figure 1c).

Enfin, on soulève la tige 5 par des moyens non représentés pour rabattre, sur le dessus de la boulette 2, le bord 8 de la tranche 1 qui reposait auparavant sur la tige 5 (figure 1d). On dispose ainsi d'une paupiette 10 préformée en ce sens que trois côtés de la tranche de viande se trouvent rabattus autour de la boulette de chair, seul le quatrième côté 9 de la tranche 1 n'étant pas encore rabattu.

Le formage complet et le calibrage de la paupiette ainsi préformée s'effectuent de la manière illustrée sur la figure 2.

On retrouve sur cette figure la paupiette préformée 10 reposant sur le brin inférieur 11 horizontal d'un tapis 12 allongé, en matériau flexible, dont les deux extrémités 13 et 14 sont fixes. Le tapis 12 dont le brin inférieur 11 repose sur un plan de support horizontal 15 décrit une double boucle 16 en S en passant sur un rouleau supérieur 17.

De préférence, le plan de support 15 est amovible, ce qui permet de choisir, parmi plusieurs plans 15 d'épaisseurs différentes, celui convenant le mieux au produit à former.

La boulette 10 préformée est située entre la boucle inférieure du tapis 12 et l'extrémité 13 du brin inférieur 11 du tapis, de telle manière que le bord 9 de la tranche de viande 1 non encore rabattu contre la boulette de la paupiette, repose sur le brin inférieur 11 du tapis 12 en étant orienté vers l'extrémité 13 du tapis 12.

En déplaçant le rouleau 17 en direction de l'extrémité 13 du tapis 12, on fait avancer la boucle 16 du tapis 12 vers l'extrémité 13, ce qui provoque en même temps un mouvement de roulement vers le haut du tapis à l'endroit de la boucle 16. Sous l'effet de ce déplacement avec roulement de la boucle 16 du tapis 12, la paupiette 10 préformée se trouve entraînée, en roulant sur elle-même, en direction de l'extrémité 13 devant la boucle 16, ce qui rabat également le quatrième bord 9 de la tranche de viande 1 contre la boulette, c'est-à-dire achève le formage de la paupiette. En même temps, en abaissant le rouleau 17 pendant le trajet de déplacement en direction de l'extrémité 13, comme cela est visible sur la figure 2, la boucle 16 permet d'exercer un effet de serrage sur la paupiette, ce qui procure un calibrage avant que la paupiette 18 entièrement formée quitte le tapis 12 à l'extrémité 13 pour être par exemple reprise dans un support 19 en forme de moule.

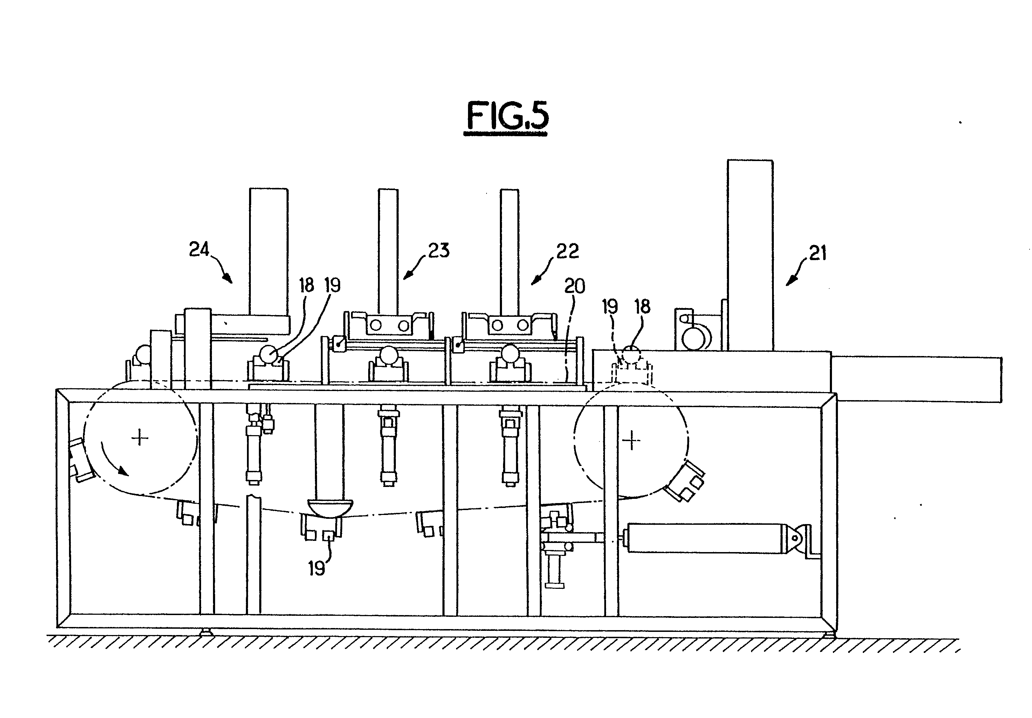

Comme représenté sur la figure 5, ce moule 19 peut par exemple être monté sur un moyen de transport sans fin 20 tel que des chaînes, portant une multitude de moules 19 pour faire passer ces moules successivement, pas à pas, à un poste de formage et calibrage 21 et à trois postes de ficelage 22, 23, 24 d'une installation complète de formage et de ficelage de paupiettes dont la partie ficelage est décrite plus en détail dans une demande de brevet déposée le même jour par les mêmes déposants sous le titre "Procédé et installation de ficelage d'objets, notamment de produits à base de viande".

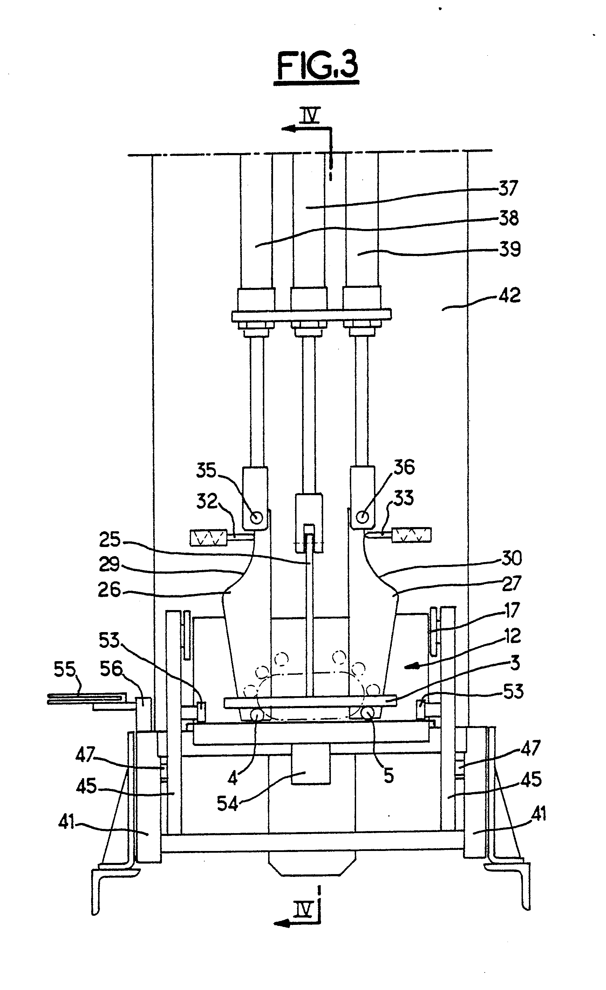

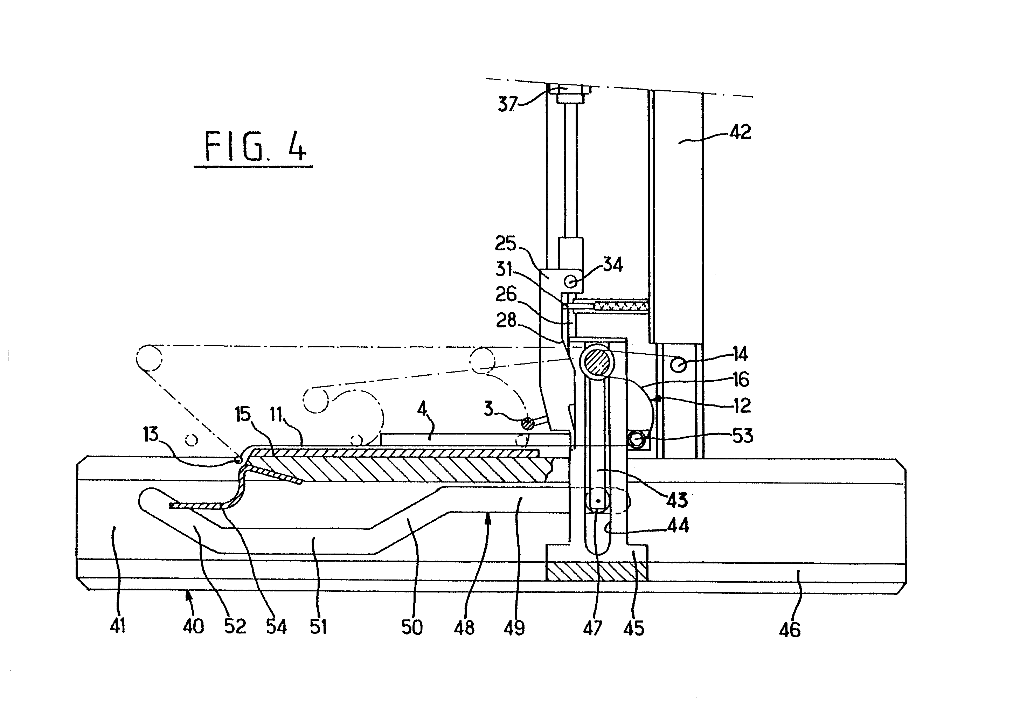

Selon les figures 3 et 4, les trois tiges 3, 4, 5 servant à rabattre trois côtés de la tranche de viande sur le dessus de la boulette de chair, en vue du préformage d'une paupiette, sont montées au-dessus du tapis 12 de roulage et de calibrage. Les trois tiges 3, 4, 5 sont fixées à l'extrémité inférieure de leviers pendulaires 25, 26, 27 comportant chacun un profil de came 28, 29, 30, coopérant avec une butée 31, 32, 33 effaçable à l'encontre de l'action d'un ressort au-delà d'un effort correspondant à un seuil défini par la force du ressort. Chacun des trois leviers pendulaires 25, 26, 27 est articulé par un axe horizontal 34, 35, 36 parallèle à la tige 3, 4, 5 qu'il supporte, sur l'extrémité inférieure de la tige de piston d'un vérin vertical 37, 38, 39, de préférence d'un vérin pneumatique à double effet. Les profils de came 28, 29, 30 sont choisis de manière que lors de la montée des tiges 3, 4, 5 sous l'action des vérins 37, 38, 39, les tiges 3, 4, 5 qui occupent au départ, sous l'effet de la gravité, les positions indiquées en traits pleins sur les figures 3 et 4, effectuent également un mouvement au-dessus de la boulette de chair reposant sur la tranche de viande, comme indiqué en traits mixtes pour les deux tiges 4 et 5 sur la figure 3.

La course des vérins 37, 38, 39 est choisie de manière qu'en position remontée des tiges 3, 4, 5, ces dernières se trouvent situées au-dessus du rouleau de déviation 17 supérieur du tapis 12, de manière à ne pas gêner le déplacement du rouleau 17.

L'extrémité avant 13 du tapis 12 de brin inférieur 11 est fixée à un bâti inférieur 40 formé principalement de deux longerons 41. L'extrémité arrière 14 du brin supérieur du tapis 12 est fixée à un bâti supérieur 42 s'appuyant sur le bâti 40 et portant les trois vérins 37 à 39.

Le rouleau 17 qui dévie le tapis 12 pour former la double boucle 16 en S est monté en rotation, à chaque extrémité, sur un coulisseau 43 mobile dans une glissière verticale 44 d'un chariot 45 lui-même mobile horizontalement dans une glissière longitudinale 46 de chaque longeron 41.

Chaque coulisseau 43 comporte un galet 47 suiveur de came guidé dans une came en forme de rainure 48 de chaque longeron 41. La rainure 48 comprend à l'arrière un tronçon horizontal haut 49 dans la zone située en dessous des tiges 3, 4 et 5, suivi en direction de l'extrémité avant 13 du tapis 12, successivement d'un tronçon 50 descendant, d'un tronçon 51 horizontal bas et d'un tronçon 52 remontant.

Chaque chariot 45 porte un galet 53 faisant saillie en direction du chariot 45 opposé à proximité au-dessus du plan de support 15 du brin inférieur 11 du tapis 12. Les deux galets 53 qui coopèrent avec les bords du tapis 12 sont destinés à ramener en arrière la boucle 16 du tapis 12 lors du mouvement de recul des chariots 45. A cet effet, le tapis 12 passe dans un sens autour du rouleau 17 et en sens opposé autour des deux galets 53 alignés. Ces derniers sont montés sur les chariots 45 en arrière par rapport aux rouleaux 12.

A l'extrémité avant 13 du tapis 12, le bâti 40 porte, au milieu des deux longerons 41, une palette 54 qui guide la paupiette formée et calibrée, lors de son passage dans le moule 19 (voir figures 2 et 5).

On reconnaît par ailleurs, sur la figure 3, un organe de blocage de la boulette de chair pendant le rabattement vers le haut des bords de la tranche de viande, cet organe se présentant sous la forme d'une fourchette 55 montée pivotante autour d'un axe vertical 56 sous l'action d'une commande non représentée, par exemple d'un vérin. L'organe 54 peut être amené de la position de repos selon la figure 3, dans laquelle il se trouve à l'extérieur de la trajectoire du tapis 12, en position active pour maintenir en position la boulette de chair sur la tranche de viande posée sur les tiges 3, 4, 5, pendant la montée des tiges 3, 4, 5.

Une autre possibilité pour bloquer la boulette de chair consiste à ménager un creux dans le plan de support 15.

Il convient encore de noter que le double chariot 45 est mobile horizontalement en va-et-vient, pour faire avancer et reculer la boucle 16 du tapis 12, sous l'action d'une commande non représentée, par exemple un vérin pneumatique à double effet.

Le déroulement correct des mouvements des différents éléments mobiles intervenant dans le formage et calibrage des paupiettes est commandé par exemple par un automate programmable.

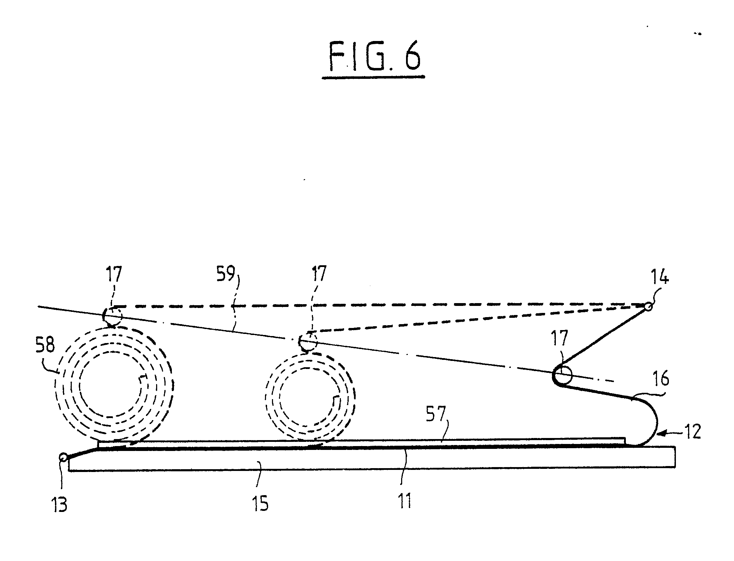

Selon la figure 6, on amène un produit 57 mince, initialement plat, sous la forme d'un rouleau 58 en enroulant le produit 57 à plusieurs tours sur lui-même, sur un dispositif de formage qui diffère de celui de la figure 2 par le fait que le rouleau mobile 17, au lieu de se rapprocher du plan de support 15 pendant son mouvement en direction de l'extrémité 13, s'écarte de ce plan, vers le haut. Ainsi, le rouleau 17 s'écarte du plan de support 15 sur lequel s'appuie le produit 57, au fur et à mesure que le produit 57 est enroulé sur ce plan, c'est-à-dire au fur et à mesure que le diamètre du rouleau 58 augmente, comme indiqué par la ligne 59. De ce fait, le produit 57 peut être enroulé à pression constante sous forme de rouleau 58.

Ce mode de formage par enroulement à plusieurs tours peut être utilisé, par exemple, pour des produits à base de viande ou de poisson, mais également pour d'autres produits alimentaires ou non.

Par ailleurs, ce mode de formage peut également être utilisé pour enrouler simultanément deux couches différentes, par exemple une couche de produit alimentaire ou analogue et une couche de feuille d'emballage qui, sur le rouleau, se trouvera entre les différentes spires du produit, par exemple pour permettre ou faciliter le déroulage ultérieur du produit, et autour de la spire du produit extérieure respective du rouleau pour protéger le rouleau à la manière d'une enveloppe. Il suffit pour cela de superposer les deux couches avant de les enrouler.

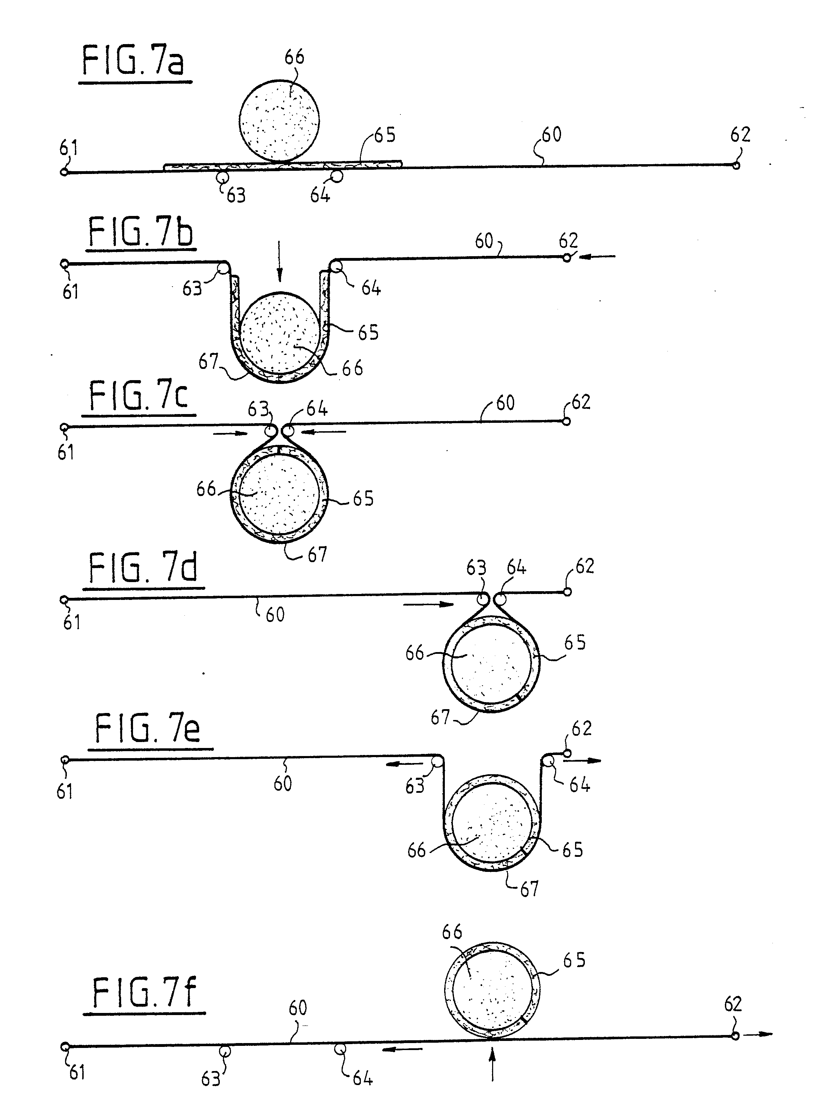

Les figures 7a à 7f représentent un autre mode de formage et de calibrage par roulage utilisant un tapis flexible 60 horizontal dont une extrémité longitudinale 61 est fixe et dont l'autre extrémité longitudinale 62 est déplaçable en va-et-vient dans le sens longitudinal du tapis sous l'action de moyens de manoeuvre non représentés. Le tapis 60 est soutenu, entre ses deux extrémités 61, 62, par deux guides transversaux 63, 64. Les deux guides 63, 64 sont par exemple montés sur un support commun (non représenté) et ce support est déplaçable en va-et-vient dans le sens longitudinal du tapis 60 sous l'action de moyens de manoeuvre non représentés. En outre, les deux guides 63, 64 sont déplaçables en va-et-vient l'un par rapport à l'autre dans le sens longitudinal du tapis 60, sous l'action de moyens de manoeuvre non représentés, entre une position où les deux guides sont rapprochés l'un de l'autre et une position où les deux guides sont éloignés l'un de l'autre d'une distance égale ou supérieure au diamètre du produit à former par roulage.

Selon la figure 7a, on tend le tapis 60 en éloignant l'extrémité mobile 62 de l'extrémité fixe, on écarte les deux guides 63, 64 et on les déplace ensemble près de l'extrémité fixe 61. On place alors un matériau en feuille 65, sur le tapis 60 entre les guides 63, 64, de manière que la feuille 65 dépasse de part et d'autre des guides 63 et 64. Sur la feuille 65, entre les deux guides 63, 64, on pose une quantité prédéterminée de produit 66 à former.

On déplace ensuite, selon la figure 7b, l'extrémité mobile 62 du tapis 60 en direction de l'extrémité fixe, ce qui détend le tapis. Sous l'effet du poids du produit 66 reposant sur le tapis entre les guides 63, 64, le tapis se déforme vers le bas en forme de boucle 67 en U entre les deux guides 63, 64, le produit 66 et la feuille 65 étant contenus dans la boucle. On rapproche ensuite les deux guides 63, 64 l'un de l'autre en déplaçant simultanément l'extrémité mobile 62 du tapis davantage en direction de l'extrémité fixe 61, de sorte que la boucle 67 se trouve fermée autour du produit 66 qui est alors entouré par la feuille 65 (figure 7c).

Selon la figure 7d, on déplace alors les deux guides 63, 64, toujours rapprochés l'un de l'autre, simultanément en direction de l'extrémité 62, ce qui fait que la boucle 67 se déplace et qu'il se produit, dans la boucle 67, un mouvement relatif entre le tapis 60 et le produit 66 entouré de la feuille 65. Ce mouvement provoque une rotation du produit 66 sur lui-même, donc un roulage du produit 66 entouré de la feuille 65 par rapport au tapis. Ce roulage conduit à un formage du produit et, du fait du serrage dans la boucle 67, à un calibrage. A la fin de ce mouvement de roulage, on écarte de nouveau les deux guides (figure 7e) et on tend finalement le tapis 60 par traction sur l'extrémité mobile 62, ce qui supprime la boucle de tapis, donc remonte le produit roulé et calibré dans le plan du tapis 60 d'où il peut être retiré. En même temps, on ramène vers l'extrémité fixe 61 les deux guides 63, 64 écartés (figure 7f), pour revenir à la position de départ en vue d'une opération de formage et de calibrage suivante (figure 7a).

Bien entendu, le mode de formage pour roulage selon la figure 7 peut également être utilisé pour des produits sans enveloppe, tout comme le mode de formage selon les figures 2 à 4.

**Revendications**

1. Procédé de formage de produits mous et/ou collants, pour les amener dans une configuration sensiblement cylindrique, dans lequel on place le produit sur un support flexible allongé horizontal, dont les deux extrémités sont maintenues fixes, on déforme le support pour lui faire décrire une boucle autour d'une partie au moins du produit, et on déplace cette boucle dans la direction longitudinale du support au moyen d'au moins un organe mobile partiellement entouré par le support flexible, de façon à faire rouler le produit sur lui-même, sensiblement sans glissement par rapport au support, caractérisé par le fait que pendant le déplacement de la boucle, on resserre simultanément et progressivement la boucle autour du produit de façon à procéder à un calibrage du produit pendant le formage.

2. Procédé suivant la revendication 1, pour entourer en outre le produit d'une enveloppe, caractérisé par le fait qu'on place un matériau en feuille entre le support flexible et le produit de manière que le produit se trouve enroulé dans cette feuille formant enveloppe, lors de son roulage sur lui-même.

3. Procédé de formage de produits mous et/ou collants, pour les amener dans une configuration sensiblement cylindrique, dans lequel on place le produit sur un support flexible allongé horizontal dont les deux extrémités sont maintenues fixes, on soutient le support entre ses extrémités par deux guides transversaux espacés de façon à définir entre eux une boucle dudit support, on place le produit dans la boucle entre les deux guides, on déplace les deux guides simultanément dans la direction longitudinale du support pour déplacer la boucle ainsi formée et rouler le produit sur lui-même, et, après roulage, on dégage le produit du support, caractérisé par le fait qu'après avoir placé le produit sur le support maintenu horizontal entre les deux guides, on rapproche l'une de l'autre les deux extrémités du support de façon à entraîner la déformation du support en boucle en U entre les guides sous l'effet du poids du produit et que le dégagement final du produit se fait en écartant à nouveau l'une de l'autre des deux extrémités du support jusqu'à supprimer la boucle.

4. Procédé suivant la revendication 3, caractérisé par le fait qu'on rapproche l'un de l'autre les deux guides de soutien, après formation de la boucle autour du produit, qu'on déplace ensuite les deux guides de soutien simultanément dans le sens longitudinal et qu'on écarte de nouveau l'un de l'autre les deux guides de soutien avant de supprimer la boucle.

5. Application du produit suivant l'une quelconque des revendications précédentes au formage de produits alimentaires pouvant être entourés d'une enveloppe alimentaire ou non.

6. Dispositif de formage de produits mous, collants, pour les amener dans une configuration sensiblement cylindrique, caractérisé par le fait qu'il comprend :

-un support (60) flexible allongé horizontal, destiné à recevoir le produit sur sa face supérieure,

-deux guides transversaux (63, 64) disposés en dessous du support pour soutenir ce dernier en formant une zone de réception de produits située entre les deux extrémités du support,

-des moyens pour déplacer une extrémité du support longitudinalement dans les deux sens opposés, pour permettre au support de former une boucle (67) entre les deux guides, sous l'effet du poids du produit placé dans cette zone, et pour supprimer ladite boucle afin de dégager le produit,

-et des moyens pour déplacer simultanément les deux guides dans le sens longitudinal du support pour rouler sur lui-même le produit se trouvant dans la boucle.

7. Dispositif suivant la revendication 6, caractérisé par le fait qu'il comprend, en outre, des moyens pour rapprocher les deux guides (63, 64) l'un de l'autre afin de fermer la boucle (67) en exerçant un serrage sur le produit pendant le roulage et pour écarter l'un de l'autre les deux guides avant de dégager le produit.

8. Dispositif de formage de produits mous, collants, pour les amener dans une configuration sensiblement cylindrique, caractérisé par le fait qu'il comprend :

-un tapis allongé (12) flexible dont les deux extrémités longitudinales (13, 14) sont fixes;

-des moyens transversaux de déviation (17, 53) pour faire décrire au tapis, entre ses deux extrémités, un trajet en forme de double boucle en S;

-des moyens de support (15) pour soutenir, dans un plan horizontal, le brin inférieur (11) du tapis déformé en S, et

-des moyens de manoeuvre pour déplacer longitudinalement lesdits moyens de déviation du tapis entre les deux extrémités de ce dernier,

caractérisé par le fait que les moyens (17, 53 de déviation du tapis comprennent un rouleau (17) à axe horizontal s'étendant, à distance au-dessus des moyens de support (15) du tapis, transversalement sur toute la largeur de ce dernier, et deux galets (53) à axes horizontaux, transversaux, alignés, situés à proximité au-dessus desdits moyens de support (15) et agissant sur les deux bords du tapis, le tapis passant dans un sens autour du rouleau et dans l'autre sens autour des galets.

9. Dispositif suivant la revendication 8, caractérisé par le fait que le rouleau (17) est monté mobile en hauteur par rapport aux moyens de support (15) du brin inférieur (11) du tapis, et le dispositif comprend des moyens (47, 48) pour guider le rouleau de manière à le rapprocher des moyens de support du brin inférieur du tapis pendant le déplacement du rouleau d'une extrémité à l'autre du tapis.

10. Dispositif suivant la revendication 9, caractérisé par le fait que le rouleau (17) est monté sur un coulisseau (43) mobile verticalement sur un chariot (45) mobile horizontalement dans le sens longitudinal du tapis sous l'action desdits moyens de manoeuvre, le coulisseau comportant un galet (47) suiveur de came en contact avec une came rectiligne (48).

11. Dispositif suivant l'une quelconque des revendications 6 à 10, pour le formage de paupiettes, caractérisé par le fait qu'il comporte des moyens (3, 4, 5) pour préformer une paupiette sur le tapis (12) avant le roulage de la paupiette sur le tapis.

12. Dispositif suivant la revendication 11, caractérisé par le fait que lesdits moyens comprennent trois tiges horizontales (3, 4, 5) susceptibles d'être abaissées sur le brin inférieur (11) du tapis, après recul complet du rouleau (17) et des galets (53), à savoir une première tige (3) orientée transversalement à la longueur du tapis et une seconde et troisième tiges (4, 5) orientées parallèlement à la longueur du tapis, et des moyens de manoeuvre (37, 38, 39) pour soulever successivement les trois tiges.

13. Dispositif suivant la revendication 12, caractérisé par le fait que chacune desdites tiges (3, 4, 5) est fixée à l'extrémité inférieure d'un levier pendulaire (25, 26, 27) articulé par un axe horizontal parallèle à la tige sur la tige de piston d'un vérin (37, 38, 39), et que chaque levier pendulaire (25, 26, 27) comporte un profil de came (28, 29, 30) coopérant avec une butée (31, 32, 33) de manière à faire pivoter les leviers lors de leur montée sous l'action des vérins.

14. Dispositif suivant la revendication 12 ou 13, caractérisé par le fait qu'il comprend, en outre, un organe de blocage (55) pouvant être amené par des moyens de manoeuvre d'une position de repos en dehors de la trajectoire de déplacement du tapis dans une position d'immobilisation de la boulette de chair sur le tapis préalablement en mouvement de montée des tiges (3, 4, 5).

FIG.1d

FIG.1c

FIG.1b

FIG.1a

FIG.2

0 280 250

# FIG.3

# FIG. 4

0 280 250

# FIG.5

0 280 250

# FIG. 6

FIG.7a

66
65
60
61    62
63    64

FIG.7b

60    62
61    63    64
67    65
66

FIG.7c

63    64    60    62
61
66    65
67

FIG.7d

63    64    62
61    60
66    65
67

FIG.7e

62
61    60    63    64
66    65
67

FIG.7f

66
65
60    62
61    63    64

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X,D | FR-A-2 515 484 (SWISS CROMATIC) <br> * Page 6, lignes 4-12 * | 1,5 | A 22 C 7/00 <br> B 65 B 11/04 <br> A 21 C 3/06 <br> A 21 C 9/06 |
| Y | | 2 | |
| A | | 8 | |
| | --- | | |
| Y,D | FR-A-2 546 734 (NGUYEN) <br> * En entier * | 2 | |
| A | | 5,8-10 | |
| | --- | | |
| A,D | NL-C- 29 743 (BURGERS) <br> * Figures * | 1,3-7 | |
| | --- | | |
| A | NL-C- 66 204 (SPYKER) <br> * Figures * | 1,5,6 | |
| | --- | | |
| A | GB-A-2 021 924 (BAMACH) <br> * Figures. * | 11 | |
| | --- | | |
| A | FR-A-2 239 946 (WINNER) <br> * Page 3, ligne 15 - page 4, ligne 5 * | 11,12 | |
| | --- | | DOMAINES TECHNIQUES RECHERCHES (Int. Cl.4) |
| A | FR-A-2 221 081 (COTTEN) | | A 22 C <br> A 47 J <br> A 23 P <br> A 23 L <br> A 21 C <br> B 65 B |
| | --- | | |
| A | US-A-4 608 919 (PROWS) | | |
| | ----- | | |

Le présent rapport a été établi pour toutes les revendications

| Lieu de la recherche | Date d'achèvement de la recherche | Examinateur |
|---|---|---|
| LA HAYE | 20-05-1988 | RIS M. |

EPO FORM 1503 03.82 (P0402)